# NOUVEAU FASCICULE DE BREVET EUROPEEN

(11) **EP 2 069 265 B2**
(45) Date de publication et mention de la décision concernant l'opposition: **01.12.2021**
(45) Mention de la délivrance du brevet: 16.01.2019
(21) Numéro de dépôt: 07823358.2
(22) Date de dépôt: 27.07.2007
(51) Int. Cl.: C05F 11/08, A01N 63/04

(54) **UTILISATION DE LEVURES ACTIVES DE L'ESPÈCE SACCHAROMYCES CEREVISIAE POUR AUGMENTER LE NOMBRE DE FLEURS ET DE BOUTOND ET/OU LA PRÉCOCITÉ DE LA FLORAISON DE PLANTS DE CULTURES FLORALES ORNEMENTALES**
VERWENDUNG AKTIVER HEFEN DER ART SACCAROMYCES CEREVISIAE ZUR ERHÖHUNG DER ANZAHL VON BLUMEN UND BLÜTENKNOSPEN UND/ODER FRÜHZEITIGEN BLÜTE VON ZIERBLUMENPFLANZEN
USE OF ACTIVE YEAST OF THE SECIES SACCHAROMYCES CEREVISIAE TO INCREASE THE NUMBER OF FLOWERS AND FLOWER BUDS AND/OR THE EARLINESS OF THE BLOOM OR FLORAL CROP PLANTS

(30) Priorité: 28.07.2006 FR 0606934
(43) Date de publication de la demande: 17.06.2009
(73) Titulaire: Danstar Ferment AG, 6300 Zug (CH)
(72) Inventeur: SANCHEZ, Jean-Marc, 31700 Daux (FR)
(74) Mandataire: J A Kemp LLP
(86) Numéro de dépôt international: PCT/FR2007/001301
(87) Numéro de publication internationale: WO 2008/015329

(56) Documents cités:
- WO-A2-01/83400
- JP-A- H10 324 609
- US-A1- 6 083 293
- US-A1- 2002 121 046
- US-A1- 2003 005 734
- US-A1- 2005 155 400
- DATABASE EPODOC EUROPEAN PATENT OFFICE, THE HAGUE, NL; XP002425075 & JP 07 008115 A (MITSUI TOATSU CHEMICALS) 13 janvier 1995 (1995-01-13) & DATABASE WPI Week 199512 Derwent Publications Ltd., London, GB; AN 1995-084248 & JP 07 008115 A (MITSUI TOATSU CHEM INC) 13 janvier 1995 (1995-01-13)
- DATABASE WPI Week 200425 Derwent Publications Ltd., London, GB; AN 2004-262869 XP002425200 & JP 2004 091425 A (NISHINIPPON SANGYO KK) 25 mars 2004 (2004-03-25)
- ATTALA et al.: "Response of 'Le-Conte' pear trees to foliar applications with active dry yeast", J. Agri. Sci. Mans. Univ., vol. 25, no. 12, 2000, pages 8005-8011,
- Shechter G. Grossman, S.: "Lipoxygenase from Baker's Yeast: Purification and Properties", Int. J. Biochem., vol. 15, no. 11, 1983, pages 1295-1304,
- Porta, H., Rocha-Sosa, M.: "Plant Lipoxygenases. Physiological and Molecular Features", Plant Physiology, vol. 130, 2002, pages 15-21,
- Ali, A. F.: "Response of Pot Marigold (Calendula Officinalis, L.) Plants to some Rock Phosphate Sources and Yeast", The Fifth Arabian Horticulture Conference, Ismailia, Egypt, March 24-28, 2001, 2001, pages 31-41,
- Al-Qubaie, A. I.: "Effect of Fertilization with Potassium and Biofertilization with Yeast on the Tolerance of Hibiscus Sabdariffa L. Plants to Irrigation with Saline Water", J. Agric. Sci. Mansoura Univ., vol. 27, no. 9, 2002, pages 6111-6122,

## Description

L'invention a pour objet une utilisation de levures du genre *Saccharomyces cerevisiae* selon la revendication 1.

De nombreux produits sont aujourd'hui appliqués par voie foliaire sur les plantes.

Ainsi, des régulateurs de croissance, composés naturels ou synthétiques, à basses concentrations, sont utilisés pour provoquer et contrôler la croissance, de la même manière que les hormones.

Des produits phytosanitaires et fertilisants (naturels ou de synthèse) sont aussi couramment utilisés.

US2002/121046 décrit une méthode pour stimuler la croissance des plantes par application d'une composition contenant des levures.

Pour des cultures florales ornementales (horticulture), ces apports foliaires sont courants et la demande va de plus en plus vers des produits naturels respectueux de l'environnement.

Les recherches effectuées à cet égard par l'inventeur l'ont conduit à étudier l'intérêt de levures pour ces applications.

On a proposé d'ajouter des levures aux fertilisants pour apport au sol.

Il a été également démontré que des levures actives pouvaient avoir des effets bénéfiques sur la croissance des plantes après application foliaire sur des cultures légumières et fruitières et même céréalières (poivrons, échalottes, pommes,...). Les bénéfices ont été observés sur les rendements en poids et en sucres des récoltes.

Certaines souches ont été testées comme antagonistes de maladies de plantes (ex : *Cryptoccus Nodaenis* permet de lutter contre le fusarium du blé) et sont utilisées à des fins phytosanitaires.

L'inventeur avait effectué des expérimentations confirmant son bénéfice en poids de récolte sur les cultures fruitières et maraîchères.

Par la suite, l'inventeur a cherché à tester un apport foliaire de levures actives sur des plants de cultures florales ornementales pour observer l'effet et cerner un éventuel intérêt.

Il s'est alors avéré que, de manière surprenante, l'application de levures du genre Saccharomyces cerevisiae permettait d'augmenter de manière significative le nombre de boutons floraux et de fleurs.

L'invention a donc pour but de fournir une nouvelle utilisation de levures du genre *Saccharomyces cerevisiae* pour augmenter le nombre de fleurs et de boutonsde plants de cultures florales ornamentales, caractérisée en ce qu'elle comprend l'application de levures du genre Saccharomyces cerevisiae par voie foliaire.

Comme illustré par les exemples, l'apport de levures par voie foliaire à des doses peu élevées permet de manière inattendue d'avancer la date de floraison et d'augmenter le nombre de boutons floraux et fleurs, ainsi que la durée de la floraison.

Les levures sont utilisées sous forme de pâtes, crèmes, ou levures sèches et sont mises en suspension dans l'eau aux fins de pulvérisation.

Leur application est réalisée avantageusement à raison de 0,01 à 1 gramme de matière sèche de levure par plants au total, de préférence de 0,1 à 0,5 et notamment de l'ordre de 0,2 g, par pulvérisation sur les plantes, de suspensions de ces levures dans de l'eau.

Les levures mises en oeuvre sont des levures actives et/ou des levures inactives, l'inactivation étant réalisée avantageusement selon les méthodes classiques, par voie chimique ou enzymatique, ou par traitement thermique.

Elles sont produites à partir de souches du genre *Saccharomyces.* Des souches appropriées sont choisies parmi les espèces *cerevisiae.*

D'autres caractéristiques et avantages sont donnés dans les exemples qui suivent qui illustrent des dispositions de l'invention, sans limiter sa portée.

### 1 - Apport de levures actives par voie foliaire sur culture de cyclamens (Exemple de Référence)

Expérimentation menée sous serres dans le département de la Haute-Garonne.
Date de repiquage : 20/07/05 (stade 4 feuilles)
Deux modalités :
   - 42 plants témoins sans levures actives
   - 42 plants traités avec levures actives *(Saccharomyces cerevisiae*)

Les levures ont été appliquées en 4 traitements successifs, réalisés à une fréquence hebdomadaire.

Le mode d'application a été le suivant : mise en suspension des levures actives dans un pulvérisateur, puis application foliaire de la suspension.

La dose appliquée à chacun des 4 traitements a été de 0,2 g de matière sèche / plant soit 0,8 g de matière sèche / plant au total.

Les comptages de fleurs ont été mis en place tous les 7-10 jours, et ce dès la fin des traitements.

42 répétitions ont été mises en place pour permettre un traitement statistique des résultats.

Les résultats ont été les suivants :

| | Nombre de nouvelles fleurs produites | | | | | |
|---|---|---|---|---|---|---|
| | 16/08/05 | 22/08/05 | 02/09/05 | 16/09/05 | 30/09/05 | 07/10/05 |
| Témoins | 10 | 7 | 104 | 24 | 63 | 47 |
| Traités | 15 | 28 | 115 | 31 | 80 | 70 |
| Avantage traites | +50% | +300% | +10,6% | +29,2% | +27% | +48,9% |

Les résultats obtenus sont hautement significatifs (p<0,01) montrant que l'application de levures du genre *Saccharomyces* par voie foliaire a permis l'augmentation de nombre de fleurs produites et l'avancée de la date de floraison.

### 2 - Apport de levures actives par voie foliaire sur culture de fushias (Exemple de Référence)

Expérimentation menée sous serres dans le département de la Haute-Garonne.
Date de repiquage : 15/03/06 (stade 6 feuilles)
Deux modalités :
   - 15 plants témoins sans levures actives
   - 15 plants traités avec levures actives *(Saccharomyces cerevisiae*)

Les levures ont été appliquées en 5 traitements successifs, réalisés à une fréquence hebdomadaire.

Le mode d'application a été le suivant : mise en suspension des levures actives dans un pulvérisateur, puis application foliaire de la suspension.

La dose appliquée à chacun des 5 traitements a été de 0,1 g de matière sèche / plant, soit 0,5 g de matière sèche / plant au total.

Le comptage des fleurs écloses a été mis en place à la fin du cycle de production, avant commercialisation et après les traitements (09/05/06).

15 répétitions ont été mises en place pour permettre un traitement statistique des résultats.

Les résultats ont été les suivants :

| | Nombre moyen de fleurs / plant |
|---|---|
| Témoins | 4,866 |
| Traités | 10 |
| Avantage traités | +105,5% |

Les résultats obtenus selon le test Fisher Snedecor, Logiciel StatBox Pro Agri (P < 0,05) sont particulièrement significatifs, démontrant l'intérêt de l'application de levures actives par voie foliaire pour augmenter le nombre de fleurs par plants.

### 3 - Apport de levures actives par voie foliaire sur culture de géraniums

Expérimentation menée sous serres dans le département de la Haute-Garonne.

### Variété « Roi du balcon »

Date de repiquage : 20/03/06 (stade 6 feuilles)
Deux modalités :
   - 30 plants témoins sans levures actives
   - 30 plants traités avec un mélange 50/50 de levures inactives et de levures sèches actives *(Saccharomyces cerevisiae*)

Les levures ont été appliquées en 5 traitements successifs, réalisés à une fréquence hebdomadaire.

Le mode d'application a été le suivant : mise en suspension des levures actives dans un pulvérisateur, puis application foliaire de la suspension.

Deux doses ont été appliquées en 5 traitements successifs :
- Dose 1 : 0,01 g de matière sèche de levure / plant / application (soit 0,05 g de matière sèche de levure / plant au total)
- Dose 2 : 0,2 g de matière sèche de levure / plant / application (soit 1 g de matière sèche de levure / plant / au total)

Le comptage des boutons floraux et des fleurs écloses a été mis en place à la fin du cycle de production, avant commercialisation et après les traitements (02/05/06).

Les premières fleurs sont apparues 9 jours avant sur les plants traités par rapport aux plants non traités.

Pour chaque dose testée, 15 répétitions ont été mises en place pour permettre un traitement statistique des résultats.

Les résultats ont été les suivants :

| | Dose 1 | | Dose 2 | |
|---|---|---|---|---|
| | Tiges florales | Bourgeons floraux | Tiges florales | Bourgeons floraux |
| Témoins | 8,5 | 59 | 6,3 | 42,3 |
| Traités | 11,53 | 84 | 10,4 | 77,1 |
| Avantage traités | +35,17% | +42,37% | +65,08% | +82,26% |

Les mesures effectuées selon le test Fisher Snedecor, Logiciel StatBox Pro Agri (P < 0,05) montrent que dans ce cas également les résultats obtenus sont significatifs.

Par l'application des levures actives, on observe en effet une augmentation du nombre de boutons floraux et de tiges florales. De plus, cette application a permis d'avancer l'apparition des premières fleurs de 9 jours.

## Revendications

1. Utilisation de levures du genre *Saccharomyces cerevisiae* pour augmenter le nombre de fleurs et de boutons de plants de cultures florales ornementales, **caractérisée en ce qu'**elle comprend l'application des levures du genre *Saccharomyces cerevisiae* par voie foliaire.

2. Utilisation selon la revendication 1, **caractérisée en ce que** les levures sont utilisées sous forme de pâtes, crèmes, ou levures sèches et sont mises en suspension dans l'eau aux fins de pulvérisation.

3. Utilisation selon la revendication 1 ou 2, **caractérisée en ce que** les levures sont appliquées par pulvérisation foliaire de suspensions dans l'eau de ces levures à raison de 0,01 g à 1 gramme de matière sèche de levure par plants au total, de préférence de 0,1 à 0,5 g et notamment de l'ordre de 0,2 g.

4. Utilisation selon la revendication 1 ou 2, **caractérisée par** la mise en oeuvre de levures actives ou de levures inactives, ou de mélanges de levures actives et de levures inactives.

## Patentansprüche

1. Verwendung von Hefen der Gattung *Saccharomyces cerevisiae* zur Erhöhung der Anzahl der Blüten und Knospen von Setzlingen aus Zierblumenkulturen, **dadurch gekennzeichnet, dass** sie die Applikation der Hefen der Gattung *Saccharomyces cerevisiae* über die Blätter umfasst.

2. Verwendung nach Anspruch 1, **dadurch gekennzeichnet, dass** die Hefen in Form von Pasten, Cremes oder Trockenhefen verwendet werden und für die Zwecke der Spritzung in Wasser suspendiert werden.

3. Verwendung nach Anspruch 1 oder 2, **dadurch gekennzeichnet, dass** die Hefen durch Blattspritzung von Suspensionen in Wasser dieser Hefen in einer Menge von 0,01 g bis 1 Gramm Hefetrockenmasse pro Setzling insgesamt, bevorzugt von 0,1 bis 0,5 g und insbesondere in der Größenordnung von 0,2 g appliziert werden.

4. Verwendung nach Anspruch 1 oder 2, **gekennzeichnet durch** den Einsatz von aktiven Hefen oder von inaktiven Hefen oder von Gemischen aus aktiven Hefen und inaktiven Hefen.

## Claims

1. Use of yeasts of the genus *Saccharomyces cerevisiae* for increasing the number of flowers and buds of seedlings of ornamental floral crops, **characterised in that** it comprises the application of yeasts of the genus *Saccharomyces cerevisiae* via foliar application.

2. Use according to claim 1, **characterised in that** the yeasts are used in the form of pastes, creams or dried yeasts and are suspended in water for spraying purposes.

3. Use according to claim 1 or 2, **characterised in that** the yeasts are applied via foliar spraying of suspensions in water of these yeasts in an amount of 0.01 g to 1 gram of yeast dry matter per seedling in total, preferably 0.1 to 0.5 g and in particular approximately 0.2 g.

4. Use according to claim 1 or 2, **characterised by** the use of active or inactive yeasts or mixtures of active and inactive yeasts.
